(19)

Europäisches
Patentamt
European
Patent Office
Office européen
des brevets

(11)  EP 3 828 344 A1

(12)  **EUROPEAN PATENT APPLICATION**

(43) Date of publication:
02.06.2021  Bulletin 2021/22

(51) Int Cl.:
**E02D 13/00** (2006.01)   **E02D 27/52** (2006.01)
**E21B 17/02** (2006.01)

(21) Application number: **19212265.3**

(22) Date of filing: **28.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Ørsted Wind Power A/S
7000 Fredericia Skæbæk (DK)**

(72) Inventor: **HANSEN, Jakob Yi
2820 Gentofte (DK)**

(74) Representative: **Gaunt, Thomas Derrick et al
Lewis Silkin LLP
5 Chancery Lane
Clifford's Inn
London EC4A 1BL (GB)**

(54)  **APPARATUS FOR USE WITH A FOUNDATION, A FOUNDATION, AND METHOD OF INSTALLING A FOUNDATION**

(57)  Apparatus (10) for use with a foundation (1) having a hollow interior (7) and a tapering section (3). The foundation (1) is for insertion into a soil (6) submerged in water (8). The apparatus (10) comprises a gas delivery feed (10) that is located within the interior of the foundation and generates bubbles of gas (11) in the water (8). The gas delivery feed (10) is configured for location such that, in use, an aerated region of water is created within the tapering section's interior (7) once the tapering section (3) is submerged.

FIG 2

EP 3 828 344 A1

**Description**

The present invention concerns apparatus for use with a foundation, a foundation for a structure, and method of installing a foundation. In particular, the present invention concerns structural foundations, such as monopiles, for insertion into a submerged soil for supporting structures such as buildings, walls, offshore structures, and wind turbines, above the water level. The present invention is particularly suited to foundations for offshore applications where the foundation is installed into the seabed submerged beneath seawater.

Structural foundations are often installed by driving the foundation into the ground using a pile hammer to apply a series of axial impacts to drive the foundation down into the soil. As it is driven, soil is displaced by the foundation pile, thereby compressing the surrounding soil and increasing the axial friction forces along the foundation's body. However, as the demand for foundations with higher load-bearing capacity has increased, they are becoming bigger. Larger piles result in higher pile driving resistance, caused by increased soil friction, as well as lower energy transfer to the pile during driving due to the difference in impedance between a relatively lighter hammer and a relatively heavier pile. As such, a greater number of hammer impacts and even higher impact forces are required to achieve the required installation depths. This not only imposes significant mechanical requirements, but also results in more noise being generated. Noise, in particular, can have a significant detrimental impact on the surrounding environment, especially for marine life in offshore situations.

The above challenges with installing foundations are further exacerbated in situations where the soil is submerged beneath a body of water and the foundation comprises a tapering section. Specifically, foundations often have a hollow tubular body comprising a lower section connected to an upper section by a tapering section. The lower section is formed of a cylindrical body having a relatively large diameter (e.g. 8-12 metres), and the upper section will be formed of a cylindrical body with a narrower diameter (e.g. 6-10 metres). The tapering section therefore tapers inward, narrowing in diameter so as to provide the transition between the diameters of the lower and upper sections. In many piles, this tapering section is provided by a conical shape that allows gradual change in diameter. However, other tapering profiles are also possible, such as a stepped or curved formation. For large foundations, the transition may be 10-30 metres in height. Whilst the above example dimensions may represent large piles by current standards, with foundation technology continuing to develop, one can only imagine what the future may bring for these dimensions. Nevertheless, irrespective of size, a common issue with these foundations is that in scenarios where the soil is submerged in water, the presence of the tapering section has the effect of "trapping" water during the installation process.

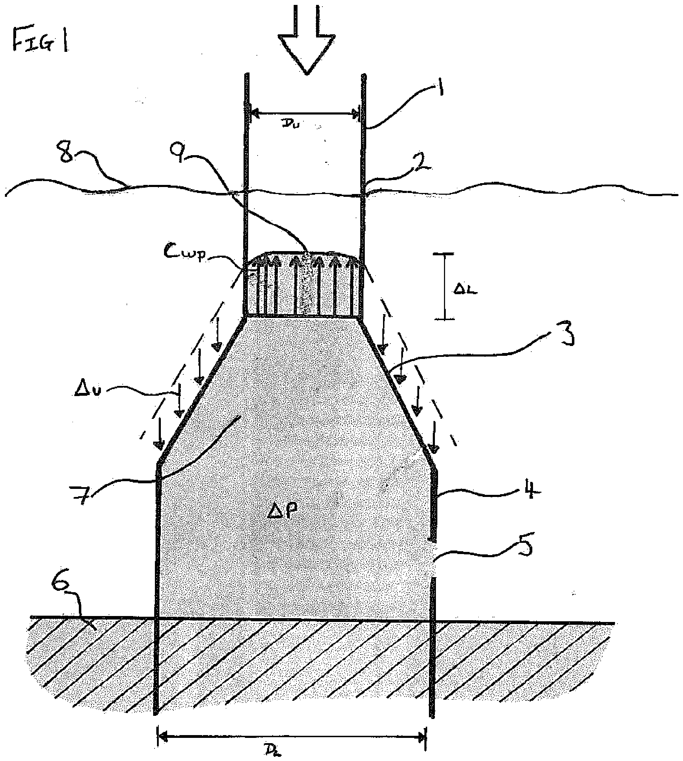

The above issue will be explained further in reference to Figure 1. This Figure shows a monopile 1 having a tapering section 3. In this example, the tapering section 3 has a conical shape. The monopile 1 has been partially driven into the soil 6 submerged below the water line 8. The monopile body 1 comprises a lower section 4 having a relatively larger diameter $D_L$, and an upper section 2 having a relatively smaller diameter $D_u$. The upper and lower sections are connected by a conical section 3 which presents an inclined surface on the interior of the foundation 7. The lower section 4 of the foundation is provided with an opening 5 for allowing water to flow between the interior and exterior. This opening may also be used as an exit for electrical export cables. As the foundation 1 is driven downwardly under the force of hammer impacts, the inclined face of the conical section 3 acts to compress the water beneath as this is funnelled towards the narrower upper section 2 in a propagating pressure front 9. That is, in response to each hammer impact, the water in the interior of the foundation becomes momentarily pressurised before the pressure can be released through the opening 5 or the pressure front 9. This has the effect of reducing the driving energy delivered by each hammer impact. Overcoming this effect then necessitates the use of higher driving energy and a higher number of impacts. If the required driving energy reaches the maximum a certain hammer can deliver, then a larger hammer becomes necessary. The energy lost due to the work done on the water is proportional to the pressure differences, which can be estimated by the Joukowsky equation:

$$\Delta p = \rho_w \cdot c_w \cdot \Delta u \cdot \left( D_l^2 - D_u^2 \right) / \left( D_l^2 + D_u^2 \right)$$

where $\rho_w$ = density of seawater
$c_w$ = celerity of seawater
$\Delta_p$ = change in pressure

In addition to the loss of driving efficiency, it will also be understood that the tapering section of the foundation will be subjected to increased hoop stresses, and the use of larger hammers will also generate more noise.

The present invention therefore seeks to address the above issues with installing conventional foundations with tapering sections.

According to a first aspect of the present invention there is provided apparatus for use with a foundation having a hollow interior and a tapering section, the foundation for insertion into a soil submerged in water, the apparatus comprising: a gas delivery feed for generating bubbles of gas in the water, wherein the gas delivery feed is configured for location within the interior of the foundation such that, in use, an aerated region of water is created within the tapering section's interior once the tapering section is submerged.

In this way, once the tapering section has been submerged beneath the water, the gas delivery feed may release a stream of gas bubbles that effectively concentrate within this region of the interior of the foundation. This results in a localised region of gas/water mixture. As the gas has a lower density than the water, the effective density of the fluid (i.e. the water and gas combined) is therefore reduced. This provides an increased compressibility of the fluid within this region, leading to a reduction in celerity (shock front speed). As such, when the tapering section is driven down during the installation process, the energy that would otherwise be lost displacing water is reduced. The result is that, not only is pile driving resistance lowered, but the tapering section is also subjected to lower hoop stresses. Importantly, the reduced resistance to driving forces outweighs the marginal increase in buoyancy associated with the air within the aerated region. Therefore, the present invention provides ancillary apparatus for foundation installation that may allow for smaller hammers and lower blow counts to be used to achieve a required installation depth.

Preferably, the gas delivery feed comprises a bubble generating section comprising a pipe having a plurality of apertures for releasing gas into the water therefrom. In this way, the bubble generating section may provide a bubble curtain formed from a simple piping arrangement. The pipe may be provided as a flexible hose or may be formed as rigid pipe. The gas delivery feed may be driven by a pressurised gas supply, such as from a compressor, with the apertures being provided, for example, in the form of nozzles or vents, or slits in the pipe. The apertures may be provided in various arrangements. For example, they may be arranged in one or more lines along the pipe, or be provided in a staggered arrangement. The nozzles may also be located at any position around the pipe. For example, the nozzles may face downwardly from the bottom of the pipe. The pipe could also be constructed of a diffusive material. More complex piping arrangements are also envisaged. For example, the gas delivery feed may comprise a manifold for feeding a plurality of bubble generating sections.

Preferably, the gas delivery feed is configured to fix to an interior surface of the foundation below the tapering section for releasing bubbles upwards to an inclined surface of the tapering section. In this way, the gas delivery feed may locate at or adjacent to the lower boundary of the tapering section for releasing bubbles such that they flow upward over the inner surface of the tapering section. During installation, when this surface is driven downward, the bubbles thereby provide an aerated zone at the surface interface, providing reduced celerity.

Preferably, the gas delivery feed is configured to fix around the interior circumferential surface of the foundation. In this way, bubble generation may be distributed around the periphery of the foundation's interior, allowing a diffuse flow of bubbles to be funnelled up and over the whole interior surface of the conical section. This may thereby provide an even reduction in celerity.

Preferably the apparatus comprises an attachment means for securing the gas delivery feed to the foundation. In this way, the apparatus itself may comprise a mounting, fixing or frame for securing and positioning the gas delivery feed within the interior of the foundation. In embodiments, the attachment means may be detachable for allowing the apparatus to be removed from foundation after installation. This may allow the apparatus to be reused for multiple installations, as well as allowing any degradable components to be removed from the foundation once installation has been completed.

Preferably, the attachment means comprises a frame for positioning the gas delivery feed within the interior of the foundation. In this way, the frame may support the gas delivery feed in position for optimising the creation of the aerated region of water. For example, the frame may act to spread the gas delivery feed to the periphery of the foundation's interior for maximising the distribution of the bubble curtain around the conical section. The frame may also act to press the gas delivery feed against the surface of the interior of the foundation for locating it and securing it in position.

In embodiments, the frame is collapsable. In this way, the frame may be expanded to fit within the interior of a foundation during installation, and then collapsed to withdraw the apparatus once installation is complete.

According to a second aspect of the invention there is provided a foundation for insertion into a soil submerged in water, the foundation comprising: a hollow interior; a tapering section; and a gas delivery feed for generating bubbles in the water, wherein the gas delivery feed is located within the interior of the foundation such that, in use, an aerated region of water is created within the tapering section's interior once the tapering section is submerged.

In this way, a foundation may be provided with an inbuilt gas delivery feed. During foundation installation, the gas delivery feed may be connected to a compressor such that bubbles are generated within the interior of the foundation. This produces a lower density, localised region of gas/water mixture within the tapering section, which thereby provides increased compressibility. As such, a lower installation resistance is achieved, allowing the use of smaller hammers and a lower number of impacts. At the same time, less noise is generated during installation.

Preferably, the gas delivery feed comprises a bubble generating section comprising a pipe having a plurality of apertures for releasing gas into the water therefrom.

Preferably, the gas delivery feed is fixed to an interior surface of the foundation below the tapering section for releasing bubbles upwards to an inclined surface of the tapering section.

Preferably, the gas delivery feed is fixed around the interior circumferential surface of the foundation.

Preferably, the foundation further comprises a mounting to which the gas delivery feed is fixed to the interior. In this way, the foundation can retain the gas delivery feed in place within its interior cavity during installation. The mounting may comprise a formation in the foundation body for receiving the gas delivery feed. For example, the gas delivery feed may be received within a recessed channel provided on the surface of the foundation's interior.

According to a third aspect of the invention there is provided a method of installing a foundation into a soil submerged in water, comprising the steps of: providing a foundation having a hollow interior and a tapering section; inserting the foundation through the water into the soil until tapering section is submerged; generating bubbles in the water using a gas delivery feed provided within the interior of the foundation, the gas delivery feed being located such that an aerated region of water is created within the tapering section's interior.

In this way, the aerated region provides a fluid area of lower density within the tapering section. The compressibility of this region reduces the driving resistance of the water and thereby allows the use of smaller hammers and/or lower number of impacts, and less noise is generated during foundation installation as a consequence.

Preferably, the step of generating bubbles comprises directing bubbles upwards to an inclined surface of the tapering section.

Preferably, the step of generating bubbles comprises pumping pressurised air into the water through the gas delivery feed. For example, a compressor may be provided on the foundation installation vessel, and may be connected to the gas delivery feed for delivering pressurised air thereto.

According to a fourth aspect of the invention there is provided an apparatus for use with a foundation having a hollow interior and a tapering section, the foundation for insertion into a soil submerged in water, the apparatus comprising: a compressible body comprising a plurality of pockets of gas embedded therein, wherein the compressible body is for location within the interior of the foundation for forming a compressible region within the tapering section's interior once the tapering section is submerged.

In this way, the pockets of gas embedded within the compressible body effectively provide compressible gas bubbles within the solid structure. These function in the same way as the bubbles in previous embodiments in that they provide a region of lower density within the tapering section. The compressibility of this region thereby reduces the driving resistance of the water and hence allows the use of smaller hammers and/or lower number of impacts. Less noise is also generated during foundation installation as a consequence.

In preferred embodiments, the above referenced tapering section is a conical section.

Illustrative embodiments of the present invention will now be described with reference to the accompanying drawings in which:

Figure 1 shows a schematic cross-sectional view of a conventional foundation;
Figure 2 shows a schematic cross-sectional view of a foundation according to a first embodiment of the invention;
Figure 3 shows a simplified schematic cross-sectional view of a foundation incorporating apparatus according to a second embodiment of the invention;
Figures 4A-4B shows simplified schematic representations of a foundation incorporating apparatus having a collapsable frame, according to a third embodiment of the invention;
Figure 5 shows a simplified schematic cross-sectional view of a foundation incorporating apparatus according to a fourth embodiment of the invention; and
Figure 6 shows a simplified schematic cross-sectional view of a foundation incorporating apparatus according to a fifth embodiment of the invention.

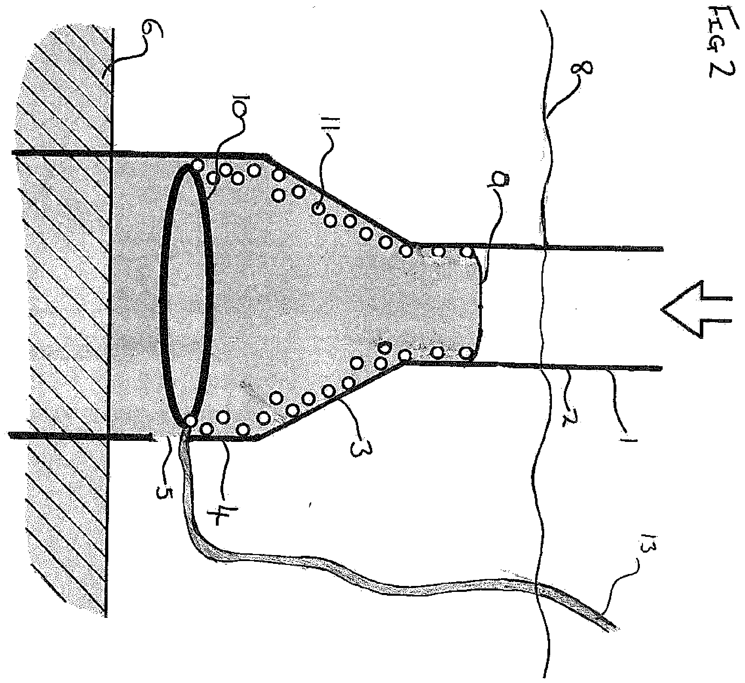

A first embodiment of the invention will now be described in reference to Figure 2. In this embodiment, the foundation is provided as monopile 1 with a hollow interior 7. As shown in Figure 2, the monopile 1 is partially submerged below the water line 8, and has been partially driven into the soil 6. The monopile body 1 comprises a lower section 4 having a relatively larger diameter, and an upper section 2 having a relatively smaller diameter. The upper and lower sections are connected by a tapering section provided in the form of conical section 3. The conical section 3 presents an inclined surface on the interior of the foundation 7. The lower section 4 of the foundation is provided with an opening 5 for allowing water to flow between the interior and exterior, whilst also providing an opening for electrical export cables.

In this embodiment, the foundation is provided with a gas delivery feed pipe 10 which is located adjacent to the internal surface of the lower foundation section 4, around the circumference of the internal diameter and vertically adjacent to the lower boundary of the conical section 6. In this embodiment the gas delivery feed pipe 10 is attached by a mounting to the interior of the lower foundation section 4. The feed pipe 10 is fed by an air supply tube (13) which is connected through opening 5 to an air pump (not shown) above the water surface 8. The air pump may, for example, be supplied from a pile installation vessel.

The gas delivery feed pipe 10 is provided with a plurality of nozzles (not shown) distributed around the circumference of the internal perimeter of the foundation body. In this embodiment, the nozzles are provided in a line on the top of the feed pipe 10 and are directed upwardly toward the conical section 3. In use, pressurised air is pumped through the air supply tube 13 and through the feed pipe 10, from where it is released into the water 8 through the nozzles. This generates a curtain of air bubbles 11 around the internal perimeter of the foundation, which float upwardly and are then guided radially inward by the inclined interior surface of the conical section 3. This acts to provide a diffuse flow of air bubbles over the interior surface of the conical section 3. As a result, a localised zone of air bubbles is formed at the interface between the water and the conical section 3 inside the foundation, and the effective density of the fluid within the conical section is therefore reduced.

With the above arrangement, when the head of the foundation 1 is impacted during pile driving, the impact forces are translated through the body of the foundation and act to drive the monopile 1, including the conical section 3 downward. The lower effective density provided by the air/water mix within the interior of the conical section allows this to compress more easily - air compresses a lot more easily than water. This thereby provides a reduction in celerity (shock front speed), which minimises the energy loss to the water. For example, the generation of a 1-2% air/water mixture may reduce the celerity by around 90-95%. This thereby reduces the water pressure increase during each impact and, correspondingly the work done by the driving down force on the water. As the resistance to the pile driving down forces are reduced, the foundation may be thereby installed using smaller hammers and/or with a lower number of impacts. Less noise is therefore also generated, and the conical section will be subjected to less hoop stress during the installation process.

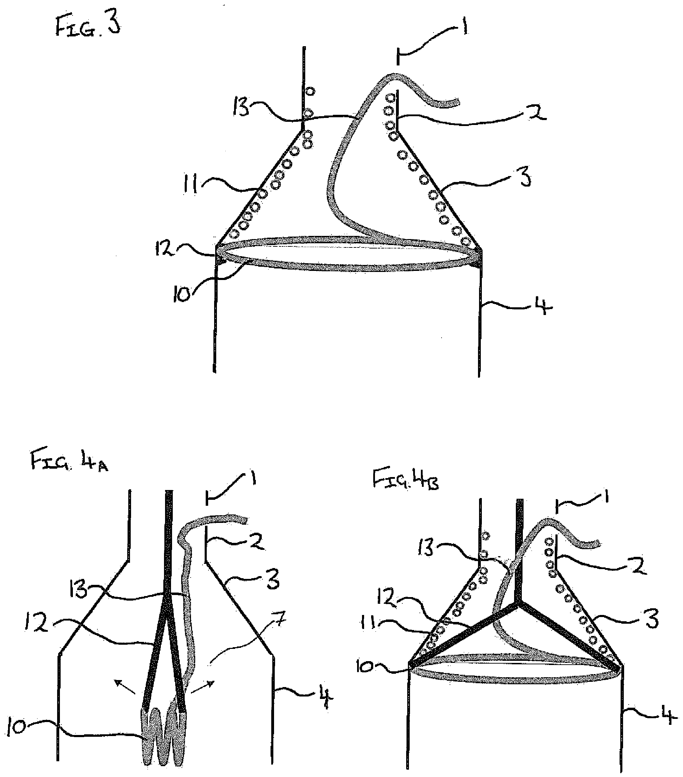

Figure 3 shows a simplified schematic cross-sectional view of a foundation incorporating an apparatus according to a second embodiment of the invention. For simplicity, this figure omits the waterline and soil shown in the previous figures. The second embodiment shown in Figure 3 works in substantially the same way as the first embodiment except that, in this example, the air supply tube 13 is fed through an aperture provided in the upper section 2 of the foundation body. This embodiment may therefore be particularly suitable for embodiments where the foundation is of a TP (transition piece) less design, where the upper section 2 is provided with a door aperture. In this embodiment, the gas delivery feed pipe 10 is located and secured within the foundation body using mountings 12

Further embodiments of the invention may also be provided which are similar to that shown in the second embodiment, as shown in Figure 3, but the gas delivery feed pipe 10 is mounted to the foundation using detachable fixtures 12. Once installation of the foundation has been completed, the air supply tube 13 may be withdrawn, thereby pulling the feed pipe 10 to detach it from the fixtures 12. This allows the apparatus to be detached from the foundation and re-used.

Figures 4A and 4B show simplified schematic views of a third embodiment of the invention. This embodiment is similar to the previous embodiments, except that the gas delivery feed pipe 10 provided as a part of a separate apparatus which is fitted into the foundation 1. That is, the apparatus is provided as separate ancillary apparatus which may be fitted to the monopile to aid foundation installation, and then removed from the foundation after the foundation has been installed.

In this third embodiment, rather than mounting the apparatus to the foundation using fixtures, a collapsable frame 12 is provided to locate the gas feed pipe 10 within the interior of the foundation. Figure 4A shows the frame 12 in its collapsed state, which allows the feed pipe 10 to be inserted into the interior cavity 7 of the foundation 1. Once in position, the frame 12 may be expanded, as shown in Figure 4B, to extend out the feed pipe 10 and position this below the lower circumferential boundary of the conical section. At this stage, the apparatus may be operated as with previous embodiments to generate gas bubbles 11 as the foundation 1 is driven down during installation. Once the required installation depth has been achieved, the frame 12 may be collapsed and withdrawn from the foundation's interior.

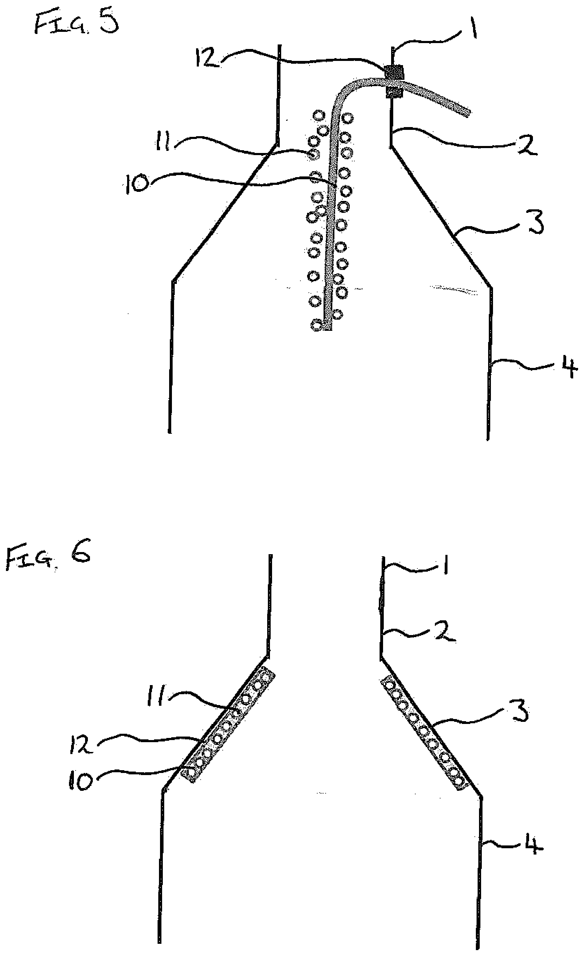

Figure 5 shows a fourth embodiment of the invention. In this case, the apparatus is provided with simplified structure where the feed pipe 10 is provided as simple extension of hose which is mounted to an aperture in the upper section 2 of the foundation and extends down into the interior conical region. Bubbles 11 are generated from apertures in the hose, and are therefore released from the centre of the foundation's interior. Whilst this may not be as effective as earlier embodiments where the bubbles 11 are directed to the conical surface, this embodiment functions in substantially the same way and provides a simplified design. That is, an aerated region is created in the middle zone of water occupying the conical section 3. This provides a lower density region, which allows the fluid therein to be compressed more easily. In turn, this provides a reduction in celerity (shock front speed), which minimises the energy loss to the water during each impact.

Figure 6 shows a simplified schematic view of an alternative embodiment of the invention where the shock absorption mechanism is provided in the form of a sponge mat 10 containing embedded air pockets 11. In this way, the mat 10 forms a compressible body that is attached to the conical section 3 of the monopile. As the mat 10 is more compressible than the water, during the foundation's installation, the mat 10 is preferentially compressed, minimising the energy lost compressing the water. As with previous embodiments, the mat 10 thereby provides a lower density region, which allows the fluid within the tapering section 3 to be compressed more easily.

As will be appreciated, the inventive arrangements disclosed herein allow a foundation to be driven into the soil more easily. This reduces foundation installation cost because smaller hammers are needed, and a fewer number of impacts are necessary to achieve a desired installation depth. Equally, installation noise is also reduced, which is particularly important for offshore applications.

It will be understood that the embodiments illustrated above show applications of the invention only for the purposes of illustration. In practice the invention may be applied to many different configurations, the detailed embodiments being straightforward for those skilled in the art to implement.

Finally, it will also be understood that pneumatic acoustic barriers that generate bubble curtains in water are known in the field of offshore foundations. However, it should be appreciated that such pneumatic acoustic barriers operate in a very different way to the present invention. That is, conventional pneumatic acoustic barriers are positioned on the seabed round the outside of a foundation during installation. These are used to form a bubble curtain around the exterior of the foundation body which acts to interrupt the propagation of acoustic waves or diminish their amplitude through water. In contrast, the present invention operates within the interior of the foundation itself, and uses air bubbles to reduce fluid density. That is, rather than interrupting acoustic waves generated by impacts, the present invention uses air to reduce the energy needed by each impact.

## Claims

1. Apparatus for use with a foundation having a hollow interior and a tapering section, the foundation for insertion into a soil submerged in water, the apparatus comprising:

   a gas delivery feed for generating bubbles of gas in the water,
   wherein the gas delivery feed is configured for location within the interior of the foundation such that, in use, an aerated region of water is created within the tapering section's interior once the tapering section is submerged.

2. Apparatus according to claim 1, wherein the gas delivery feed comprises a bubble generating section comprising a pipe having a plurality of apertures for releasing gas into the water therefrom.

3. Apparatus according to claim 1 or 2, wherein the gas delivery feed is configured to fix to an interior surface of the foundation below the tapering section for releasing bubbles upwards to an inclined surface of the tapering section.

4. Apparatus according to any preceding claim, wherein the gas delivery feed is configured to fix around the interior circumferential surface of the foundation.

5. Apparatus according to any preceding claim, further comprising an attachment means for securing the gas delivery feed to the foundation.

6. Apparatus according to claim 5, wherein the attachment means comprises a frame for positioning the gas delivery feed within the interior of the foundation.

7. Apparatus according to claim 6, wherein the frame is collapsable.

8. A foundation for insertion into a soil submerged in water, the foundation comprising:

   a hollow interior;
   a tapering section; and
   a gas delivery feed for generating bubbles in the water,
   wherein the gas delivery feed is to located within the interior of the foundation such that, in use, an aerated region of water is created within the tapering section's interior once the tapering section is submerged.

9. A foundation according to claim 8, wherein the gas delivery feed comprises a bubble generating section comprising a pipe having a plurality of apertures for releasing gas into the water therefrom.

10. A foundation according to claim 8 or 9, wherein the gas delivery feed is fixed to an interior surface of the foundation below the tapering section for releasing bubbles upwards to an inclined surface of the tapering section.

11. A foundation according to any one of claims 8 to 10, wherein the gas delivery feed is fixed around the interior circumferential surface of the foundation.

12. A foundation according to any one of claims 8 to 11, further comprising a mounting to which the gas delivery feed is fixed to the interior.

13. A method of installing a foundation into a soil submerged in water, comprising the steps of:

   providing a foundation having a hollow interior and a tapering section;
   inserting the foundation through the water into the soil until tapering section is submerged;
   generating bubbles in the water using a gas delivery feed provided within the interior of the foundation, the gas delivery feed being located such that an aerated region of water is created within the tapering section's interior.

14. A method according to claim 13, wherein the step of generating bubbles comprises releasing bubbles upwards to an inclined surface of the tapering section.

15. Apparatus for use with a foundation having a hollow interior and a tapering section, the foundation for insertion into a soil submerged in water, the apparatus comprising:

   a compressible body comprising a plurality of gas pockets embedded therein,
   wherein the compressible body is for location within the interior of the foundation for forming a compressible region within the tapering section's interior once the tapering section is submerged.

FIG 1

FIG 2

FIG.3

FIG.4A

FIG.4B

FIG. 5

1

12

11

10

2

2

3

4

FIG. 6

1

11

2

12

3

10

4

Europäisches
Patentamt

European
Patent Office

Office européen
des brevets

# EUROPEAN SEARCH REPORT

Application Number

EP 19 21 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 261 425 A1 (D E M E NV [BE]) 15 December 2010 (2010-12-15) * paragraphs [0024], [0028] - [0032], [0064]; claim 1; figures 3, 4, 7, 10-12 * ----- | 1-15 | INV. E02D13/00 E02D27/52 E21B17/02 |
| A | CN 108 061 010 A (UNIV DALIAN TECH) 22 May 2018 (2018-05-22) * paragraphs [0012], [0033] - [0035]; claim 1; figure 1 * ----- | 1-15 | |
| A | WO 2013/067438 A1 (REINHALL P G [US]; DAHL PETER H [US]; DARDIS JOHN TIMOTHY II [US]) 10 May 2013 (2013-05-10) * the whole document * ----- | 1-15 | |

TECHNICAL FIELDS
SEARCHED (IPC)

E02D
G10K
E21B

The present search report has been drawn up for all claims

| Place of search | Date of completion of the search | Examiner |
|---|---|---|
| Munich | 30 April 2020 | Patrascu, Bogdan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 2265

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | | Publication date | Patent family member(s) | | Publication date |
|---|---|---|---|---|---|
| EP 2261425 | A1 | 15-12-2010 | EP | 2261425 A1 | 15-12-2010 |
| | | | NL | 2003012 C2 | 15-12-2010 |
| CN 108061010 | A | 22-05-2018 | NONE | | |
| WO 2013067438 | A1 | 10-05-2013 | CA | 2854007 A1 | 10-05-2013 |
| | | | DK | 2776636 T3 | 06-02-2017 |
| | | | EP | 2776636 A1 | 17-09-2014 |
| | | | HK | 1202318 A1 | 25-09-2015 |
| | | | US | 2014056650 A1 | 27-02-2014 |
| | | | US | 2014086693 A1 | 27-03-2014 |
| | | | WO | 2013067438 A1 | 10-05-2013 |

EPO FORM P0459

For more details about this annex : see Official Journal of the European Patent Office, No. 12/82